# EUROPÄISCHE PATENTSCHRIFT

(11) **EP 0 553 628 B1**
(45) Veröffentlichungstag und Bekanntmachung des Hinweises auf die Patenterteilung: **10.06.1998**
(21) Anmeldenummer: 93100335.4
(22) Anmeldetag: 12.01.1993
(51) Int. Cl.: A01N 31/08, A01N 31/10, A01N 25/02

(54) **Fliessfähige mikrobizide Mittel**
Flowable microbicidal agents
Agent microbicides coulables

(30) Priorität: 25.01.1992 DE 4202051
(43) Veröffentlichungstag der Anmeldung: 04.08.1993
(73) Patentinhaber: BAYER AG, 51368 Leverkusen (DE)
(72) Erfinder: Lorentzen, Jens-Peter, Dr., W-5000 Köln 80 (DE); Radt, Walter, Dr., Verstorben (DE); Lehmann, Horst-Dieter, W-4150 Krefeld 11 (DE)

(56) Entgegenhaltungen:
- DE-B- 1 021 542
- DE-B- 1 025 102
- GB-A- 802 232
- US-A- 2 874 087

## Beschreibung

Die vorliegende Anmeldung betrifft hochkonzentrierte stabile, flüssige mikrobizide Mittel deren Herstellung und Verwendung.

Es ist bekannt, daß die Verbindungen o-Phenylphenol (OPP), p-Chlor-m-kresol (CMK), p-Chlor-m-xylenol und Pentachlorphenol mikrobizide Eigenschaften besitzen (DE-1021542, DE-1025102 und US-2874087).

Diese Verbindungen zeichnen sich durch eine breite und schnell einsetzende Wirkung gegen eine Vielzahl von Bakterien, Viren, Schimmelpilzen und Hefen aus.

Besonders vorteilhaft ist zudem die geringe Interaktion der Wirkstoffe mit anderen Bestandteilen eines zu konservierenden beziehungsweise desinfizierenden Mediums, weshalb diese Substanzen insbesondere zur Konservierung technischer Produkte und zur Desinfektion im Krankenhaus, in der Tierhaltung und im Haushalt eingesetzt werden. Desweiteren besitzen insbesondere OPP und CMK ein breit untersuchtes und positives toxikologisches und ökologisches Profil. Häufig werden auch diese Verbindungen auch in Kombination für die genannten Anwendungsfelder eingesetzt, da sie ein sich mikrobiologisch gut ergänzendes Wirkungsspektrum aufweisen. Da die jeweiligen Verbindungen jedoch kristalline Substanzen darstellen, müssen zur Formulierung für die Verwendung als technisches Konservierungsmittel oder als Desinfektionsmittel größere Mengen an organischen Lösungsmittel zugegeben werden. Dabei sind die Reinsubstanzen in den gängigen Lösungsmitteln nur bis zu maximal 50 % löslich. Solche Lösungen haben zudem häufig den Nachteil, daß die Wirkstoffe bei niedriger Temperatur, bei Vorliegen von Kristallisationskeimen oder rauhen Oberflächen in größerer Menge wieder auskristallisieren und somit vor Gebrauch wieder rekonditioniert werden müssen. Zudem macht sich der hohe Gehalt an Lösungsmittel nachteilig bemerkbar, da Unverträglichkeiten mit dem technischen Material oder mit anderen Substanzen in der Desinfektionslösung auftreten können. Weiterhin stellt ein hoher Lösungsmittelanteil in Formulierungen einen Nachteil unter ökonomischen, toxikologischen und ökologischen Gesichtspunkten dar.

Es wurde nun überraschenderweise gefunden, daß hochkonzentrierte, stabile flüssige und wasserfreie mikrobizide Mittel enthaltend o-Phenylphenol und p-Chlor-m-kresol sowie maximal 50 Gew.-% eines organischen Lösungsmittel oder Lösungsmittelgemisches hergestellt werden können.

Bevorzugt werden zwei der obengenannten Verbindungen im Verhältnis 75:25 bis 50:50 Gewichtsteile gemischt, bei Temperaturen von 20°C bis 50°C verschmolzen und anschließend mit einem organischen Lösungsmittel oder Lösungsmittelgemisch versetzt.

Die Verbindungen können aber auch einzeln oder als Gemisch mit dem organischen Lösungsmittel oder Lösungsmittelgemisch versetzt und bei Temperaturen bis zum Schmelzpunkt der entsprechenden Verbindungen bzw. Gemische gelöst und gegebenenfalls anschließend vermischt werden.

Nach Abkühlung verbleiben stabile flüssige Formulierungen, aus denen die einzelnen Verbindungen in üblichen Lagertemperaturbereichen, auch bei Vorliegen von Kristallisationskeimen oder rauhen Oberflächen selbst nach tagelangem Stehen nicht wieder auskristallisieren.

Als Lösungsmittel kommen vorzugsweise polare organische Lösungsmittel oder Lösungsmittelgemische in Frage. Bevorzugt gelangen dabei Lösungsmittel, die Hydroxygruppen, Estergruppen, Ethergruppen oder Gemische dieser Funktionalitäten enthalten, zum Einsatz. Beispielhaft und vorzugsweise seien Ester und Glykol-Derivate wie Ethylenglykol, Propylenglykol, Diethylenglykol, Triethylenglykol, Polyethylenglykol genannt.

Die erfindungsgemäßen Mittel enthalten das organische Lösungsmittel oder Lösungsmittelgemisch vorzugsweise in Mengen von 0 bis 30 Gew.-%, insbesondere 1 bis 20 Gew.-%, besonders bevorzugt 5 bis 15 Gew.-%.

Die Mischungsverhältnisse von OPP zu CMK liegen hierbei insbesondere bei 65 bis 55 Gewichtsteile OPP zu 35 bis 45 Gewichsteilen CMK.

Die erfindungsgemäße Mischung von OPP und CMK besitzt Vorteile gegenüber Lösungen der reinen Komponenten in Bezug auf Materialverträglichkeit, Lösungsmittelkosten, Lösungsmittelverbrauch, Lösungsmittelbelastung. Von besonderer Bedeutung ist überdies, daß eine Mischung von OPP und CMK in den angegebenen Mischungsverhältnissen schon bei Temperaturen ab 15°C eine freifließende Schmelze ergibt, so daß der Lösungsmittelanteil ganz wegfallen oder, bei Herstellung von Formulierungen die auch unterhalb von 0°C flüssig sein müssen, äußerst gering gehalten werden kann.

Gegenüber den Feststoffformulierungen besitzen derartige flüssige Formulierungen den Vorteil, daß sie leichter zu handhaben sind (aufgrund der Pumpfähigkeit leichter zu transportieren, umzufüllen und zu dosieren) und nicht stauben (toxikologischer Vorteil, Staubexposition).

Die erfindungsgemäßen Mittel werden vorteilhafterweise gegen einen oxidativen Angriff durch Luftsauerstoff und damit verbundenen Verfärbungen durch die Verwendung von 0,05 % bis 10 % Phosphonobutantricarbonsäure sowie anderen Oxidationsinhibitoren geschützt.

Die erfindungsgemäßen Mittel können ferner mit weiteren Wirkstoffen kombiniert werden, um die Wirkung gegen Bakterien, Viren, Schimmelpilze und Hefen zu steigern. Beispielhaft und vorzugsweise seien folgende Wirkstoffgruppen genannt:
1. Aldehyde wie Formaldehyd oder dessen Depotstoffe wie z.B. Benzylalkoholmono(poly)hemiformal, Tris-ω-hydroxyethyl-hexahydrotriazin, N-Methylolchloracetamid, Dimethylolharnstoff, Dimethyloxazolidin, Methylenbis-1,3-dimethyloloxazolidin, Methylenbis-1,3-oxazin, Trisoxymethylmethan, Tetrahydro-1,3,5-thiadiazin-2-thion sowie Glutardialdehyd, Acrolein, Glyoxal,
2. Isothiazolinone wie beispielsweise 5-Chlor-2-methylisothiazolin-3-on, 2-Methylisothiazolin-3-on, Benzisothiazolinon, N-Octylisothiazolinon, Cyclopentylisothiazolinon, 4,5-Dichlor-N-(octyl-oder methyl)isothiazolinon,
3. Iodpropargylaklohol und Derivate wie z.B. Iodpropargylalkoholcarbamate I-C≡C-CH₂OCONHR mit R=H, Alkyl, Aryl, insbesondere R=n-C₄H₉,Ph. Ester des Iodpropargylalkohols, insbesondere mit geschützten oder ungeschützten Aminosäuren, Dipeptiden und höheren Peptiden, z.B. I-C≡CCH₂OCH₂OCOCHRNHCO₂C(CH₃)₃. Ethoxylierter Iodpropargylalkohol I-C≡C-CH₂OCH₂CH₂OH und dessen Derivate, Triiodallylalkohol,
4. Mikrobistatisch beziehungsweise mikrobizid wirksame Alkohole, wie z.B. Benzylalkohol, Methanol, Ethanol, Isopropanol, Phenylethylalkohol, 2-Phenoxyethanol, 2-Phenoxy-1-propanol, 3-(4-Chlorphenoxy)-1,2-propandiol, 2,4-Dichlorbenzylalkohol,
5. Bromnitroverbindungen, wie z.B. 2-Brom-2-nitropropan-1,3-diol oder 5-Brom-5-nitro-1,3-dioxan,
6. Organische Säuren und deren Derivate, wie z.B. Ameisensäure, Essigsäure, Chloressigsäure, Bromessigsäure, Peressigsäure, Propionsäure, Milchsäure, Weinsäure, Zitronensäure, Sorbinsäure, Undecensäure, Benzoesäure; p-Hydroxybenzoesäure und deren Ester, Salicylsäure, Dehydracetsäure, Chloressigsäureamid,
7. 2-Mercaptopyrin-1-oxid, 2-Mercaptopyridin und deren Salze, 2,2'-Dithiopyridin-1-oxid, 8. Quaternäre Ammoniumverbindungen, wie z.B. N-Alkyl-N,N-dimethyl-benzyl-ammoniumchlorid, Di-n-decyldimethyl-ammoniumchlorid,
9. Guanidin-Derivate, wie z.B. Polyhexamethylenbiguanidin-Hydrochlorid, Chlorhexidin,
10. Morpholin-Derivate, wie z.B. 2-(2-Nitrobutyl)morpholin oder 4,4-(2-Ethyl-2-nitro-trimethylen)dimorpholin,
11. Dithiocarbamate, wie z.B. Salze des Dimethyldithiocarbamates,
12. Thiocyanate, wie z.B. Methylenbisthiocyanat, 2-Thiocyanatomethylthiobenzthiazol.

Die erfindungsgemäßen Mittel werden zur Bekämpfung von Bakterien, Viren, Schimmelpilzen und Hefen in oder auf technischen Materialien, insbesondere als Desinfektions- und Konservierungsmittel verwendet.

Den erfindungsgemäßen Mitteln werden dabei insbesondere für Desinfektionszwecke oberflächenaktive Substanzen zuzugeben, wie z.B. Dodecyl-di(aminoethyl)-glycerin, 1-Dodecyl-1,4-7-triazaoctan-8-carbonsäure und deren Salze, Amide von Cocospropylendiamin, wie z.B. mit Glutaminsäure. Zudem können Duftstoffe sowie weitere übliche Additive, wie z.B. Emulgatoren, Stabilisatoren, Korrosionsinhibitoren und Oxidationsinhibitoren zugefügt werden.

Anwendungsgebiete für die erfindungsgemäßen Mittel sind:
1. Desinfektionsmittel für Krankenhäuser, die Tierhaltung, den Haushalt usw.
2. Konservierung von Leimen und Klebstoffen auf Basis der bekannten tierischen, pflanzlichen oder synthetischen Rohstoffe,
3. Konservierung von Lacken und Farben,
4. Konservierung von Stärkeprodukten, z.B. für die Druckindustrie sowie von Stärkelösungen, -dispersionen und -slurries,
5. Konservierung von Betonadditiven, deren Basis z.B. Melasse oder Ligninsulfonate sind,
6. Konservierung von Bitumenemulsionen,
7. Konservierung von Kühlschmierstoffen, die in mineralölbasierende, halbsynthetische oder vollsynthetische Emulsionen oder Lösungen untergliedert werden können.
8. Konservierung von Kunststoffdispersionen, wie z.B. Latexdispersionen oder Dispersionen auf Basis anderer Polymere,
9. Konservierung von Slurries, wie z.B. für Farbpigmente (Eisenoxidpigmente, Rußpigmente, Titandioxidpigmente) oder Slurries von Füllstoffen, wie z.B. Kaolin, Calciumcarbonat usw.,
10. Konservierung von Reinigungsmitteln und Detergentien für den technischen und Haushaltsbedarf,
11. Konservierung von anderen funktionellen Flüssigkeiten, wie z.B. für Feuchtmittel für die Druckindustrie,
12. Konservierung von Mineralölen und Mineralölprodukten,
13. Konservierung von Hilfsstoffen für die Leder-, Textil- oder fototechnische Industrie,
14. Konservierung von Vor- und Zwischenprodukten für die chemische Industrie, wie z.B. bei der Farbstoffproduktion und -lagerung,
15. Konservierung von Tinten und Tuschen,
16. Schlichten und Appreturen,
17. Wachs und Tonemulsion,
18. Stärkelösungen,
19. Gelatine-Zubereitungen,
20. Kosmetika.

Die nachfolgenden Beispiele dienen zur Erläuterung der Erfindung ohne sie darauf zu limitieren. Teile und Prozentangaben bedeuten Gewichtsteile beziehungsweise Gewichtsprozente.

### Beispiel 1

40 Teile CMK werden mit 60 Teilen OPP bei 20°C zusammengefügt und 5 Stunden bei dieser Temperatur belassen.

Man erhält eine wasserklare, freifließende Schmelze ohne Festkörperanteile. Durch Zugabe von 10 Gewichtsteilen Ethylenglykol wird eine über mehrere Wochen bei -10 bis 50°C stabile Lösung erhalten.

### Beispiel 2

35 Teile CMK werden mit 65 Teilen OPP bei 20°C zusammengefügt und 5 Stunden bei dieser Temperatur belassen.

Man erhält eine wasserklare, freifließende Schmelze ohne Festkörperanteile. Durch Zugabe von 10 Gewichtsteilen Ethylenglykol wird eine über mehrere Wochen bei -10 bis 50°C stabile Lösung erhalten.

### Beispiel 3

45 Teile CMK werden mit 55 Teilen OPP bei 20°C zusammengefügt und 5 Stunden bei dieser Temperatur belassen.

Man erhält eine wasserklare, freifließende Schmelze ohne Festkörperanteile. Durch Zugabe von 5 Gewichtsteilen Propylenglykol wird eine über mehrere Wochen bei -10 bis 50°C stabile Lösung erhalten.

### Vergleichsbeispiel

a) 100 Teile OPP werden bei 20°C mit 10 Teilen Ethylenglycol versetzt. Auch nach mehrstündigem Rühren bei 20°C erhält man keine Lösung.
b) 100 Teile CMK werden bei 20°C mit 10 Teilen Ethylenglykol versetzt. Auch nach mehrstündigem
   Rühren bei 20°C erhält man keine Lösung.
c) Wie a) und b), jedoch mit Propylenglykol. Es wird ebenfalls keine Lösung erhalten.

### Beispiel 4

40 Teile CMK werden mit 60 Teilen OPP und 10 Teilen Ethylenglykol bei 20°C zusammengefügt und 4 Stunden bei dieser Temperatur gerührt.

Man erhält eine wasserklare Lösung, aus der auch nach mehreren Wochen keine Feststoffanteile auskristallisieren.

### Beispiel 5

50 Teile CMK und 50 Teile OPP werden einzeln, jeweils mit 10 Teilen Ethylenglykol versetzt und bei 70°C gerührt bis zwei klare Lösungen entstehen. Danach werden die beiden Lösungen in der Hitze vereinigt. Nach Abkühlung verbleibt eine stabile wasserklare Lösung.

## Patentansprüche

1. Mikrobizide Mittel enthaltend als Phenolkomponenten nur p-Chlor-m-kresol und o-Phenylphenol, dadurch gekennzeichnet, daß das Mittel hochkonzentriert, flüssig und wasserfrei ist und maximal 50 Gewichtsprozent eines organischen Lösungsmittels oder Lösungsmittelgemisches enthält.

2. Mittel gemäß Anspruch 1, enthaltend o-Phenylphenol und p-Chlor-m-kresol im Verhältnis 75:25 bis 50:50 Gewichtsteilen.

3. Mittel gemäß Anspruch 1, enthaltend als organisches Lösungsmittel polare organische Lösungsmittel oder Lösungsmittelgemische.

4. Mittel gemäß Anspruch 1, enthaltend als organische Lösungsmittel Glykol-Derivate.

5. Mittel gemäß mindestens einem der Ansprüche 1 bis 4, enthaltend 0 bis 30 Gewichtsprozent an Lösungsmittel.

6. Mittel gemäß Anspruch 5, enthaltend 1 bis 20 Gewichtsprozent an Lösungsmittel.

7. Verfahren zur Herstellung der mikrobiziden Mittel nach Anspruch 1, dadurch gekennzeichnet, daß man o-Phenylphenol und p-Chlor-m-kresol vermischt und entweder
a) bei Temperaturen von 20°C bis 50°C verschmilzt und anschließend mit dem organischen Lösungsmittel oder Lösungsmittelgemisch versetzt, oder
b) mit dem organischen Lösungsmittel oder Lösungsmittelgemisch versetzt und auf Temperaturen bis zum Schmelzpunkt der Verbindungsmischung erwärmt oder
c) die Verbindungen einzeln mit den organischen Lösungsmitteln oder Lösungsmittelgemischen versetzt und bis zum Schmelzpunkt der entsprechenden Verbindung erwärmt und anschließend die resultierenden Lösungen vermischt.

8. Verwendung der Mittel nach mindestens einem der Ansprüche 1 bis 6 zur Bekämpfung von Bakterien, Viren, Schimmelpilzen und Hefen in oder auf technischen Materialien.

9. Bei Temperaturen über 15°C flüssige Mischung bestehend aus o-Phenylphenol und p-Chlor-m-kresol, wobei das Verhältnis von o-Phenylphenol zu p-Chlor-m-kresol 65:35 bis 55:45 Gewichtsteile beträgt.

## Claims

1. Microbicidal compositions comprising, as phenol components, only p-chloro-m-cresol and o-phenylphenol, characterised in that the composition is highly concentrated, liquid and free from water and comprises not more than 50% by weight of an organic solvent or solvent mixture.

2. Composition according to Claim 1, comprising o-phenylphenol and p-chloro-m-cresol in a ratio of 75:25 to 50:50 parts by weight.

3. Composition according to Claim 1, comprising, as organic solvents, polar organic solvents or solvent mixtures.

4. Composition according to Claim 1, comprising, as organic solvents, glycol derivatives.

5. Composition according to at least one of Claims 1 to 4, comprising 0 to 30 per cent by weight of solvent.

6. Composition according to Claim 5, comprising 1 to 20 per cent by weight of solvent.

7. Process for the preparation of the microbicidal compositions according to Claim 1, characterised in that o-phenylphenol and p-chloro-m-cresol are mixed and either
a) the mixture is melted at temperatures from 20°C to 50°C and subsequently treated with the organic solvent or solvent mixture, or
b) the mixture is treated with the organic solvent or solvent mixture and heated to temperatures up to the melting point of the mixture of the compounds, or
c) the compounds are treated individually with the organic solvents or solvent mixtures and these mixtures are heated to the melting point of the corresponding compound, and the resulting solutions are subsequently mixed.

8. Use of the compositions according to at least one of Claims 1 to 6 for combating bacteria, viruses, moulds and yeasts in or on industrial materials.

9. Mixture comprising o-phenylphenol and p-chloro-m-cresol, liquid at temperatures above 15°C, the ratio of o-phenylphenol to p-chloro-m-cresol being 65:35 to 55:45 parts by weight.

## Revendications

1. Produit microbicide contenant en tant que composants phénoliques uniquement le p-chloro-m-crésol et l'o-phénylphénol, caractérisé en ce qu'il est à forte concentration, liquide et anhydre, et contient au maximum 50 % en poids d'un solvant ou mélange solvant organique.

2. Produit selon la revendication 1, contenant l'o-phénylphénol et le p-chloro-m-crésol dans des proportions relatives de 75:25 à 50:50 parties en poids.

3. Produit selon la revendication 1, contenant en tant que solvant organique un solvant ou mélange solvant organique polaire.

4. Produit selon la revendication 1, contenant en tant que solvants organiques des dérivés de glycols.

5. Produit selon au moins une des revendications 1 à 4, contenant 0 à 30 % en poids de solvants.

6. Produit selon la revendication 5, contenant 1 à 20 % en poids de solvants.

7. Procédé de préparation des produits microbicides selon la revendication 1, caractérisé en ce que l'on mélange l'o-phénylphénol et le p-chloro-m-crésol et
a) on fond à des températures de 20 à 50°C, puis on ajoute le solvant ou mélange solvant organique, ou bien
b) on ajoute le solvant ou mélange solvant organique et on chauffe à des températures allant jusqu'au point de tusion du mélange des composés, ou bien
c) on ajoute le solvant ou mélange solvant organique à chacun des composés, on chauffe jusqu'au point de fusion du composé particulier puis on mélange les solutions obtenues.

8. Utilisation des produits selon au moins une des revendications 1 à 6 pour la lutte contre les bactéries, les virus, les moisissures et les levures dans ou sur les matériaux techniques.

9. Mélange liquide aux températures supérieures à 15°C, consistant en l'o-phénylphénol et le p-chloro-m-crésol, à des proportions relatives o-phénylphénol/p-chloro-m-crésol qui vont de 65:35 à 55:45 parties en poids.
